# EUROPÄISCHE PATENTANMELDUNG

(11) **EP 3 824 727 A1**
(43) Veröffentlichungstag der Anmeldung: **26.05.2021**
(21) Anmeldenummer: 20208740.9
(22) Anmeldetag: 19.11.2020
(51) Int. Cl.: A01K 31/18

(54) **VORRICHTUNG MIT GITTERBODEN FÜR DIE GEFLÜGELAUFZUCHT**

(30) Priorität: 20.11.2019 DE 102019008050
(71) Anmelder: Fienhage, Hans-Jürgen, 49424 Lutten (DE)
(72) Erfinder: Rensing, Frank, 49429 Visbek (DE)
(74) Vertreter: Heiland, Karsten

(57) **Zusammenfassung**

Die Erfindung betrifft eine Vorrichtung mit Gitterboden (10) für den Aufenthalt von jungen Küken in der Geflügelaufzucht. Erfindungsgemäß ist ein Futtertrog (13) mit Öffnungen (18) in einer Seitenwand (16) und zum Durchtritt von Futter (25) vorgesehen.

## Beschreibung

Die Erfindung betrifft eine Vorrichtung mit Gitterboden für den Aufenthalt junger Küken in der Geflügelaufzucht. Insbesondere handelt es sich um Küken im Alter von ein bis vierzehn Tagen, einschließlich sogenannter Ein-Tages-Küken, und vorzugsweise um die Aufzucht von Küken für Legehühner. Weiterhin betrifft die Erfindung eine Stalleinrichtung und einen Geflügelstall.

In einem Geflügelstall für die Aufzucht von Legehühnern werden die Küken in mehreren Ebenen auf Gitterböden gehalten. Unter jedem Gitterboden ist in der Regel ein Kotband angeordnet. Über den Gitterböden sind Getränkespender vorgesehen. Futter wird in einem oben offenen Futtertrog zur Verfügung gestellt.

Für Küken sind Gitterböden mit geringerer Maschenweite vorgesehen, damit die Küken nicht durch die Maschen auf das Kotband gelangen. Junge Küken, insbesondere Ein-Tages-Küken sind in der Regel zu klein oder zu schwach, um Futter aus einem Futtertrog aufzunehmen. Es werden deshalb Futterhaufen auf Papierunterlagen zur Verfügung gestellt. Die Fütterung der Küken ist dadurch sehr arbeitsaufwendig.

Aufgabe der vorliegenden Erfindung ist die Schaffung einer Vorrichtung für den Aufenthalt von Küken, mit der die Verabreichung von Futter weniger arbeitsaufwendig ist.

Zur Lösung der Aufgabe ist eine Vorrichtung mit den Merkmalen des Anspruchs 1 vorgesehen. Insbesondere weist der Gitterboden einen Futtertrog mit Öffnungen in einer Seitenwand und zum Durchtritt von Futter auf. Durch die Öffnungen gelangt das Futter auf die Ebene des Gitterbodens. Typischerweise ist das Futter für frisch geschlüpfte Küken innerhalb der ersten zehn bis vierzehn Tage relativ trocken und daher streufähig. Das Futter kann deshalb durch die seitlichen Öffnungen aus dem Futtertrog austreten. Der Füllstand des Futters im Futtertrog muss nur hoch genug sein. Der Futtertrog ist vorzugsweise auf dem Gitterboden oder im Anschluss daran positioniert.

Typischerweise erstreckt sich der Futtertrog über die volle Stalllänge bzw. über die Länge einer Stalleinrichtung. Vorzugsweise sind je Meter Futtertroglänge etwa zwei Öffnungen vorgesehen. Der Durchmesser der Öffnungen ist auf das Futter abgestimmt. Versuche mit üblichem Futter haben ergeben, dass Öffnungen mit einem Durchmesser von etwa 7,5 mm gut geeignet sind.

Nach einem weiteren Gedanken der Erfindung kann eine Kratzplatte oder eine andere Unterlage zum Auffangen des Futters unterhalb einer Öffnung zum Durchtritt von Futter vorgesehen sein. Vorzugsweise ist die Unterlage bzw. Kratzplatte unterhalb jeder Öffnung vorgesehen. Das Futter landet auf der Unterlage/Kratzplatte und wird dort von den Küken aufgepickt. Die Küken können auf der Kratzplatte ihrem natürlichen Kratzbedürfnis nachkommen, werden so gekräftigt und die Kratzplatte bleibt relativ sauber. Die Kratzplatte/Unterlage kann im Bedarfsfall schnell gewechselt werden und liegt insbesondere auf dem Gitterboden auf.

Nach einem weiteren Gedanken der Erfindung kann die Kratzplatte mit einem Rand ohne Abstand an der Seitenwand des Futtertroges anliegen. Aus der Öffnung fallendes Futter gelangt so garantiert auf die Kratzplatte. Vorzugsweise ist die Kratzplatte rechteckig oder quadratisch ausgebildet, beispielsweise mit einer Abmessung von 22 cm x 22 cm oder 25 cm x 25 cm.

Die Kratzplatte kann aus Kunststoff oder Metall hergestellt sein. Eine Kunststoff-Kratzplatte wird von den Küken als wärmer empfunden.

Nach einem weiteren Gedanken der Erfindung kann die Kratzplatte eine ebene Oberseite mit Erhebungen aufweisen. Die Erhebungen sind vorzugsweise rund, etwa 1 mm hoch und 1 cm im Durchmesser.

Nach einem weiteren Gedanken der Erfindung kann der Futtertrog mit einem Futterförderer versehen sein, der das Futter in Längsrichtung des Futtertroges fördert. Insbesondere handelt es sich um eine umlaufende Futterkette. Das Futter kann so weitgehend automatisiert zugefördert werden. Durch die Bewegung gelangt das Futter besser durch die seitlichen Öffnungen.

Nach einem weiteren Gedanken der Erfindung kann der Futtertrog an seiner offenen Oberseite mit einem Kükenschutzeinsatz versehen sein. Der Kükenschutzeinsatz weist in Längsrichtung des Futtertroges aufeinanderfolgende offene Bereiche auf, die so bemessen sind, dass ältere Küken mit dem Schnabel an das Futter gelangen. Die offenen Bereiche sollen aber nicht so groß sein, dass die Küken hindurchgelangen. Vielmehr können die offenen Bereiche durch Stege voneinander getrennt sein. Die Stege können relativ zu Oberkanten von Seitenwänden des Futtertroges nach unten versetzt angeordnet sein. Der Abstand zum Futter ist dann geringer.

Gegenstand der Erfindung ist auch eine Stalleinrichtung für die Geflügelaufzucht, mit einer Vorrichtung nach einem der Ansprüche 1 bis 6. Die Stalleinrichtung weist in der Regel unterschiedliche Böden in mehreren Ebenen auf.

Gegenstand der Erfindung ist auch ein Geflügelstall mit einer erfindungsgemäßen Vorrichtung oder einer erfindungsgemäßen Stalleinrichtung.

Weitere Merkmale der Erfindung ergeben sich aus der Beschreibung im Übrigen und aus den Patentansprüchen.

Vorteilhafte Ausführungsbeispiele der Erfindung werden nachfolgend anhand von Zeichnungen näher erläutert. Es zeigen:
- Fig. 1: einen Gitterboden mit Futtertrog in perspektivischer Draufsicht,

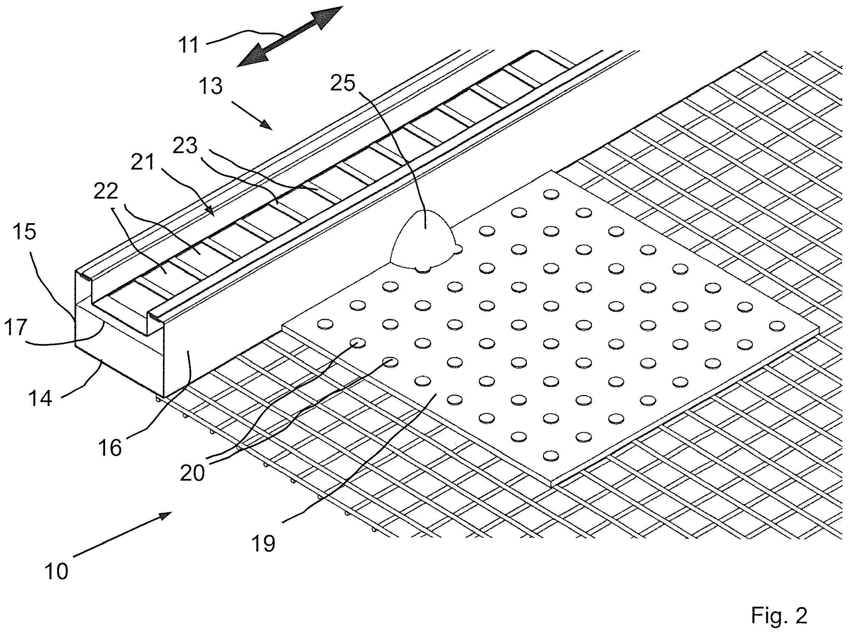

- Fig. 2: ein Detail der Fig. 1,

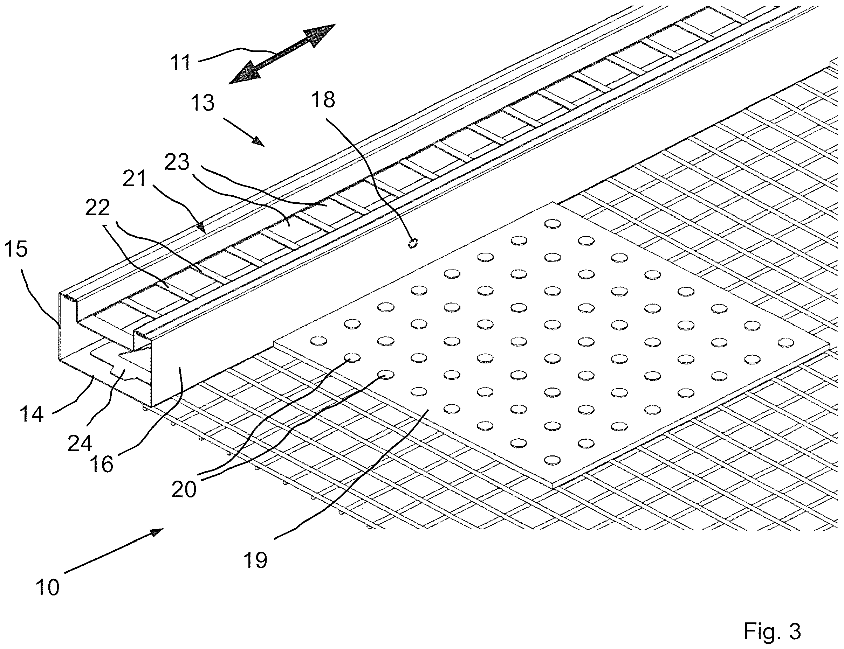

- Fig. 3: das Detail gemäß Fig. 2, jedoch ohne Futter,

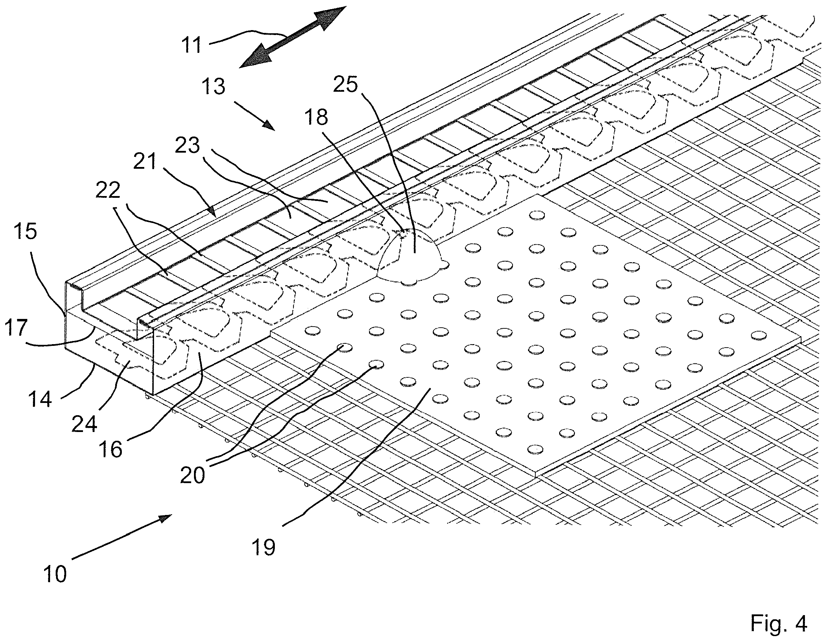

- Fig. 4: das Detail gemäß Fig. 2 mit teilweise eingezeichneten verdeckten Linien.

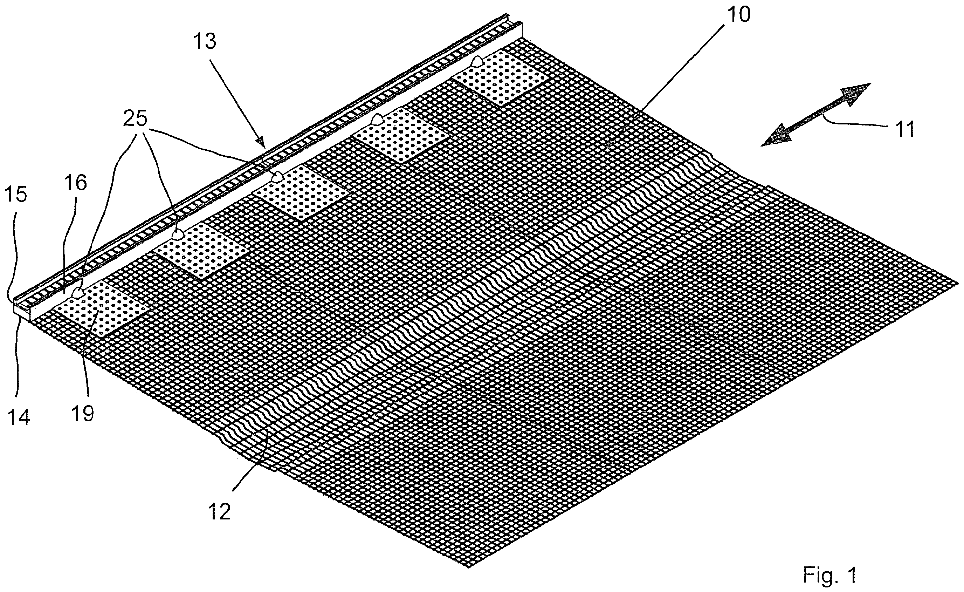

Fig. 1 zeigt einen Gitterboden 10 für die Geflügelaufzucht. Konkret handelt es sich hier um einen für die Aufzucht frisch geschlüpfter Küken geeigneten Gitterboden 10 mit entsprechend geringer Maschenweite von beispielsweise 19 mm. Der Gitterboden 10 ist rechteckig ausgebildet. In einem Geflügelstall sind in Längsrichtung - Pfeil 11 - mehrere Gitterböden 10 hintereinander angeordnet.

Etwa mittig kann der Gitterboden 10 einen in Längsrichtung 11 verlaufenden Eierbereich 12 aufweisen. Dies ist zumindest dann vorteilhaft, wenn auf den Gitterboden 10 auch Legehühner gelangen können. Vorzugsweise ist der Gitterboden 10 beidseitig zum Eierbereich 12 hin leicht geneigt ausgebildet.

Randseitig weist der Gitterboden 10 einen in Längsrichtung 11 verlaufenden Futtertrog 13 auf. Dieser erstreckt sich in einem Geflügelstall über mehrere oder alle der hintereinander angeordneten Gitterböden. Vorzugsweise ist an beiden Rändern des Gitterbodens 10 ein Futtertrog 13 vorgesehen (nicht gezeigt).

Der Futtertrog 13 weist eine Bodenwand 14, eine vom Gitterboden 10 abgewandte äußere Seitenwand 15 und eine zum Gitterboden 10 gewandte innere Seitenwand 16 auf. Im Futtertrog 13 befindet sich Futter bis zu einer Höhe, die hier als Futterniveau 17 bezeichnet wird.

Die innere Seitenwand 16 weist in Längsrichtung 11 aufeinanderfolgend einzelne Löcher 18 auf, aus denen Futter 25 vom Futtertrog 13 zum Gitterboden 10 austreten kann. Die Löcher sind etwa im Abstand von 0,5 m angeordnet und weisen einen Durchmesser auf, der auf Körnung und Feuchte des Futters abgestimmt ist. Als vorteilhaft hat sich ein Durchmesser von etwa 7,5 mm herausgestellt. Das Futterniveau 17 liegt über der Höhe der Löcher 18. Dabei sind die Löcher 18 mit Abstand zur Bodenwand 14 angeordnet. Der Abstand beträgt etwa 1 cm bis 2 cm (Oberseite Bodenwand 14 zur Unterkante Loch 18).

Unterhalb eines jeden Lochs 18 ist eine Kratzplatte 19 auf dem Gitterboden 10 angeordnet. Die Kratzplatte 19 besteht vorzugsweise aus Kunststoff, ist rechteckig ausgebildet und liegt ohne Abstand am Futtertrog 13 an. Das aus dem Loch 18 austretende Futter 25 landet auf der Kratzplatte und kann dort von Küken aufgenommen werden, die noch zu klein oder zu schwach sind um aus dem Futtertrog 13 zu fressen.

Die Kratzplatte 19 ist so ausgebildet, dass sie das natürliche Kratzbedürfnis der Küken fördert. Dadurch ist die Kratzplatte selbstreinigend. Kot und Futterreste fallen durch die Maschen im Gitterboden 10 nach unten auf ein nicht gezeigtes Kotband. Durch das mögliche Kratzen werden die Küken gekräftigt. Der Kükenkot hat eine geringere Verweildauer, da er über das Kotband abgefördert wird. Auch verringert sich die Belastung durch Ammoniakdunst.

Vorzugsweise weisen die Kratzplatten 19 auf ihrer Oberseite Erhebungen 20 auf, die dem Kratzbedürfnis der Küken entgegenkommen. Insbesondere handelt es sich um runde Erhebungen von etwa 1 mm Höhe und 10 mm Durchmesser.

Die oben offene Oberseite des Futtertrogs 13 ist hier durch ein Kükenschutzgitter 21 abgedeckt. Dieses ist geringfügig in den Futtertrog 13 hinein versenkt ausgebildet und weist quergerichtete Stege 22 mit dazwischen liegenden offenen Bereichen 23 auf. Kräftigere bzw. ältere Küken können aus dem Futtertrog 13 fressen. Die offenen Bereiche 23 sind so ausgebildet, dass die Küken mit dem Schnabel an das Futter gelangen können.

Im Futtertrog 13 ist eine umlaufende Futterkette 24 vorgesehen, mit der das Futter entlang des Futtertroges 13 förderbar ist. Dadurch gelangt kontinuierlich Futter vor die Löcher 18 und auf die Kratzplatten 19.

Sobald die Küken etwa zehn bis vierzehn Tage alt sind, kann das Futter umgestellt werden. Die Küken sind dann in der Lage aus dem Futtertrog 13 zu fressen. Das Futterniveau 17 wird unter die Löcher 18 abgesenkt. Die Kratzplatten 19 können entfernt werden oder verbleiben.

### Bezugszeichenliste:

- 10: Gitterboden
- 11: Längsrichtungspfeil
- 12: Eiersammelbereich
- 13: Futtertrog
- 14: Bodenwand
- 15: äußere Seitenwand
- 16: innere Seitenwand
- 17: Futterniveau
- 18: Löcher
- 19: Kratzplatten
- 20: Erhebungen
- 21: Kükenschutzgitter
- 22: Stege
- 23: offene Bereiche
- 24: Futterkette
- 25: Futter

## Patentansprüche

1. Vorrichtung mit Gitterboden (10) für den Aufenthalt von jungen Küken in der Geflügelaufzucht, **gekennzeichnet durch** einen Futtertrog (13) mit Öffnungen (18) in einer Seitenwand (16) und zum Durchtritt von Futter (25).

2. Vorrichtung nach Anspruch 1, **gekennzeichnet durch** eine Kratzplatte (19) oder eine andere Unterlage zum Auffangen des Futters (25) unterhalb einer Öffnung (18) im Futtertrog (13).

3. Vorrichtung nach Anspruch 2, **dadurch gekennzeichnet, dass** die Kratzplatte (19) ohne Abstand an der Seitenwand (16) des Futtertroges anliegt.

4. Vorrichtung nach Anspruch 2 oder 3, **dadurch gekennzeichnet, dass** die Kratzplatte (19) eine ebene Oberseite mit Erhebungen (20) aufweist.

5. Vorrichtung nach einem der Ansprüche 1 bis 4, **dadurch gekennzeichnet, dass** der Futtertrog (13) mit einem Futterförderer (24) versehen ist, der das Futter (25) in Längsrichtung (11) des Futtertroges (13) fördert.

6. Vorrichtung nach einem der Ansprüche 1 bis 5, **dadurch gekennzeichnet, dass** der Futtertrog (13) an seiner offenen Oberseite mit einem Kükenschutzeinsatz (21) versehen ist.

7. Stalleinrichtung für die Geflügelaufzucht, mit einer Vorrichtung nach einem der Ansprüche 1 bis 6.

8. Geflügelstall mit einer Vorrichtung nach einem der Ansprüche 1 bis 6 oder mit einer Stalleinrichtung nach Anspruch 7.
